# EUROPÄISCHE PATENTSCHRIFT

(11) **EP 3 365 151 B1**
(45) Veröffentlichungstag und Bekanntmachung des Hinweises auf die Patenterteilung: **07.08.2019**
(21) Anmeldenummer: 16794503.9
(22) Anmeldetag: 14.10.2016
(51) Int. Cl.: B29C 65/16

(54) **SCHWEISSBAUGRUPPE UND VERFAHREN ZUR HERSTELLUNG EINER SCHWEISSBAUGRUPPE**
WELDED ASSEMBLY AND PROCESS FOR MANUFACTURING A WELDED ASSEMBLY
ENSEMBLE SOUDÉ ET PROCÉDÉ DE FABRICATION D'UN ENSEMBLE SOUDÉ

(30) Priorität: 22.10.2015 DE 102015118035
(43) Veröffentlichungstag der Anmeldung: 29.08.2018
(73) Patentinhaber: JENOPTIK Automatisierungstechnik GmbH, 07745 Jena (DE)
(72) Erfinder: KRÄMER, Wilfried, 07747 Jena (DE); BÜCHEL, Andreas, 07768 Kahla (DE)
(74) Vertreter: Schaller, Renate
(86) Internationale Anmeldenummer: PCT/DE2016/100481
(87) Internationale Veröffentlichungsnummer: WO 2017/067538

(56) Entgegenhaltungen:
- EP-A1- 2 894 023
- DE-A1- 19 911 890
- JP-A- 2002 225 140
- JP-A- 2007 030 282
- US-A1- 2008 205 880
- US-A1- 2009 056 865

## Beschreibung

Eine Schweißbaugruppe, bestehend aus einem laserabsorbierenden Trägerteil und einem erfindungsgemäßen lasertransparenten Aufsetzteil, an dessen Umfangsfläche ein Schweißkragen ausgebildet ist, über den das Aufsetzteil mit dem Trägerteil durch Lasertransmissionsschweißen verbunden wurde, ist gattungsgemäß aus der JP 2007 030 282 A bekannt.

Schweißbaugruppen, die durch Lasertransmissionsschweißen hergestellt sind, und Verfahren zum Verschweißen derartiger Baugruppen sind aus dem Stand der Technik vielfach bekannt. Es ist hierbei auch bekannt, dass die Fügeflächen der beiden Schweißpartner während des Verschweißens unter Druck in einem Fügebereich, über den die Schweißverbindung hergestellt werden soll, aneinander gefügt werden müssen, damit sie zur Wärmeleitung vom absorbierenden Trägerteil zum transmittierenden Aufsetzteil Flächenkontakt miteinander haben. Da der Fügebereich seitens des transmittierenden Aufsetzteils mit der Laserstrahlung beaufschlagt werden muss, kann die Andruckkraft nicht unmittelbar in den Fügebereich eingeleitet werden, wenn damit die Laserstrahlung abgeschattet wird.

Aus der DE 199 11 890 A1 ist ein hülsenförmiger Sensorhalter mit einem teilweise oder vollständig umlaufenden Kragenstück (dort Verbindungselement) bekannt, wobei das Kragenstück an einem der Enden des Sensorhalters angeordnet ist. Das Kragenstück besteht aus lasertransparentem Kunststoffmaterial, sodass der Sensorhalter mittels Lasertransmissionsschweißen in einem nicht näher beschriebenen Fügebereich am Kragenstück mit einem Trägerteil verschweißt wird. Beim Laserschweißen ist der Sensorhalter mittels einer Spannvorrichtung gegenüber dem Trägerteil lagefixiert, wobei die Lagefixierung mit nur geringer Druckbeaufschlagung im Fügebereich erfolgt. Wie ein für die Wärmeleitung vom Trägerteil zum Sensorhalter erforderlicher Flächenkontakt im Fügebereich realisiert wird, ist in der Schrift nicht offenbart.

Eine Schweißbaugruppe gemäß dem Obergriff des Anspruchs 1 ist in DE19911890A1 offenbart. DE19911890A1 offenbart ebenfalls ein Verfahren zur Herstellung einer Schweißbaugruppe, enthaltend ein Trägerteil, bestehend aus einem für eine Laserstrahlung absorbierenden Material, mit wenigstens einer ersten Fügefläche, und ein Aufsetzteil, eine Längsachse aufweisend, mit wenigstens einem aus einem für die Laserstrahlung transparenten elastischen Material bestehenden Kragenstück, das eine zweite Fügefläche mit einer Oberflächenkontur aufweist, wobei das wenigstens eine Kragenstück an einer zur Längsachse parallelen Umfangsfläche des Aufsetzteils angeordnet ist und die wenigstens eine erste Fügefläche und die wenigstens eine zweite Fügefläche einen Fügebereich bilden, über den das Aufsetzteil mit dem Trägerteil, eine Schweißverbindung bildend, verschweißt wird, während eine Andruckkraft auf den Fügebereich wirkt,
wobei das Aufsetzteil in Richtung seiner Längsachse von einem Aufnahmedorn aufgenommen und mittels des Aufnahmedorns dem Trägerteil zugeführt, zu diesem positioniert und auf diesem angedrückt wird,
wobei das Aufsetzteil mittels des Aufnahmedorns gegenüber dem Trägerteil so positioniert wird, dass sich die wenigstens eine erste und die wenigstens eine zweite Fügefläche gegenüberliegen und dass das Aufsetzteil dem Trägerteil zugestellt wird, bis es mit dem Trägerteil in Erstberührung gebracht ist,
die Andruckkraft über den Aufnahmedorn in Richtung der Längsachse in das Aufsetzteil eingeleitet wird, wobei das Aufsetzteil an das Trägerteil angefügt wird und die Schweißbaugruppe über die zweite Fügefläche mit Laserstrahlung beaufschlagt wird, wodurch das Aufsetzteil und das Trägerteil im Fügebereich verschweißt werden.

In der JP 2007 030 282 A ist eine Schweißbaugruppe beschrieben, bestehend aus einer ersten lasertransparenten Komponente und einer zweiten laserabsorbierenden Komponente, die mittels Laser über Fügeflächen zusammengeschweißt werden. Die erste Komponente weist einen am äußeren Umfang ausgebildeten, konisch zulaufenden elastischen Kragen (dort Lippe) auf, der sich beim Andrücken an die zweite Komponente an eine periphere Begrenzungswand anlegt, während sich der Konuswinkel verringert. Durch die Anlage des Kragens an der Begrenzungswand wird die erste Komponente gegenüber der zweiten Komponente definiert positioniert und horizontal lagegesichert, womit während des anschließenden Verschweißens horizontale, relative Lageverschiebungen der Fügeflächen zueinander ausgeschlossen werden. Die geforderte Anlage an der Begrenzungswand zum einen und an einer Fügefläche der zweiten Komponente zum anderen führen zu einer Überdimensionierung. Eine gesicherte Anlage an der Begrenzungswand kann somit zu einer Stauchung des Kragens führen bzw. es bleibt ein Konuswinkel größer Null erhalten. Beides führt dazu, dass die beiden Fügeflächen zumindest keinen durchgehenden Flächenkontakt miteinander haben, womit die Qualität der Schweißverbindung beeinträchtigt wird.

Die Aufgabe der Erfindung besteht darin, eine Schweißbaugruppe mit einem Trägerteil und einem Aufsetzteil zu finden, die eine gesicherte Qualität der Schweißverbindung aufweist.

Es ist auch die Aufgabe der Erfindung, ein Verfahren zur Herstellung einer solchen Schweißbaugruppe zu finden.

Die Aufgabe wird für eine Schweißbaugruppe mit einem Trägerteil, aus einem für eine Laserstrahlung absorbierenden Material mit wenigstens einer ersten Fügefläche, und einem Aufsetzteil, mit einer Längsachse und wenigstens einem aus einem für die Laserstrahlung transparenten Material bestehenden Kragenstück, das eine zweite Fügefläche mit einem festen Ende und einem freien Ende aufweist und das an einer zur Längsachse parallelen Umfangsfläche des Aufsetzteils angeordnet ist, gelöst. Die wenigstens eine erste Fügefläche und die wenigstens eine zweite Fügefläche bilden einen Fügebereich, über den das Aufsetzteil mit dem Trägerteil, eine Schweißverbindung bildend, verschweißt ist. An dem Aufsetzteil ist wenigstens eine Andruckfläche vorhanden, über die bei der Herstellung der Schweißbaugruppe eine auf den Fügebereich wirkende Andruckkraft eingeleitet wird. Das wenigstens eine Kragenstück ist elastisch. Die zweite Fügefläche weist bezogen auf einen gedachten Bezugspunkt, der auf der Längsachse und innerhalb der ersten Fügefläche liegt, vor dem Fügen eine Oberflächenkontur auf, die von der Oberflächenkontur der ersten Fügefläche bezogen auf den gleichen Bezugspunkt vom festen Ende zum freien Ende hin stetig ab- oder zunehmend abweicht. Es ist erfindungswesentlich, dass auf oder in das Aufsetzteil in Richtung der Längsachse ein Aufnahmedorn aufsetz- bzw. einführbar ist, um das Aufsetzteil aufzunehmen, dem Trägerteil zuzuführen, auf dem Trägerteil zu positionieren und auf diesem über die wenigstens eine Andruckfläche anzudrücken. Bevorzugt ist die wenigstens eine Andruckfläche so ausgebildet, dass sie mit einer an dem Aufnahmedorn vorhandenen Kontaktfläche eine in Richtung der Längsachse wirkende kraftschlüssige Verbindung bildet. Die bei der Lösung der kraftschlüssigen Verbindung wirkenden Zugkräfte belasten die Schweißverbindung, womit bei zerstörungsfreiem Entfernen des Aufnahmedorns aus bzw. von dem Aufsetzteil die Qualität der Schweißverbindung für jede einzelne Schweißbaugruppe nachgewiesen werden kann.

Um eine hierfür ausreichende Zugkraft zu erzeugen, wird der Aufnahmedorn mit dem Aufsetzteil mit einer entsprechenden hohen kraftschlüssigen Verbindung gepaart. Die wenigstens eine Andruckfläche kann z. B. eine am Aufsetzteil innenliegende oder außenliegende konische Fläche sein, wobei an dem Aufnahmedorn eine entsprechende Kontaktfläche vorhanden ist.

In Abhängigkeit von der Oberflächenkontur der ersten Fügefläche am Trägerteil kann die Oberflächenkontur der zweiten Fügefläche am Aufsetzteil unterschiedlich vorteilhaft ausgeführt werden.

Das wenigstens eine Kragenstück kann von einer Ebene durch den gedachten Bezugspunkt abweichend, mit dem freien Ende dem Trägerteil zugewandt vorgeformt sein, wobei die Oberflächenkontur der ersten Fügefläche plan ist oder an jeder Stelle bezogen auf den gedachten Bezugspunkt eine kleinere Abweichung mit gleichem Richtungssinn von der durch den Bezugspunkt gedachten Ebene aufweist, als die zweite Fügefläche an gleicher Stelle eine Abweichung von der Ebene aufweist, und die wenigstens eine Andruckfläche eine innere Andruckfläche ist, die zwischen der Längsachse und der zweiten Fügefläche angeordnet ist.

Des Weiteren kann das wenigstens eine Kragenstück von einer Ebene durch den gedachten Bezugspunkt abweichend, mit dem freien Ende dem Trägerteil zugewandt vorgeformt sein, wobei die Oberflächenkontur der ersten Fügefläche an jeder Stelle bezogen auf den gedachten Bezugspunkt eine Abweichung von der durch den Bezugspunkt gedachten Ebene aufweist, mit entgegengesetztem Richtungssinn zu einer Abweichung der zweiten Fügefläche von der Ebene an gleicher Stelle, und die wenigstens eine Andruckfläche eine innere Andruckfläche ist, die zwischen der Längsachse und der zweiten Fügefläche angeordnet ist.

Auch kann das wenigstens eine Kragenstück von einer Ebene durch den gedachten Bezugspunkt abweichend, mit dem freien Ende vom Trägerteil abgewandt vorgeformt sein, wobei die Oberflächenkontur der ersten Fügefläche plan ist oder an jeder Stelle bezogen auf den gedachten Bezugspunkt eine Abweichung von der durch den Bezugspunkt gedachten Ebene aufweist, mit entgegengesetztem Richtungssinn zu einer Abweichung der zweiten Fügefläche von der Ebene an gleicher Stelle, und die wenigstens eine Andruckfläche eine äußere Andruckfläche ist, die bezogen auf die Längsachse außerhalb der zweiten Fügefläche angeordnet ist.

Oder das wenigstens eine Kragenstück kann von einer Ebene durch den gedachten Bezugspunkt abweichend, mit dem freien Ende vom Trägerteil abgewandt vorgeformt sein, wobei die Oberflächenkontur der ersten Fügefläche an jeder Stelle bezogen auf den gedachten Bezugspunkt eine kleinere Abweichung mit gleichem Richtungssinn von der durch den Bezugspunkt gedachten Ebene aufweist, als die zweite Fügefläche an gleicher Stelle eine Abweichung von der Ebene aufweist, und die wenigstens eine Andruckfläche eine innere Andruckfläche ist, die bezogen auf die Längsachse innerhalb der zweiten Fügefläche angeordnet ist.

Unabhängig von den Oberflächenkonturen der ersten und der zweiten Fügefläche ist vorteilhaft genau ein Kragenstück vorhanden und die zweite Fügefläche stellt eine Mantelfläche eines Kegelstumpfes und die Längsachse stellt eine Symmetrieachse dar.

Alternativ stellt die zweite Fügefläche vorteilhaft eine Mantelfläche eines Kugelabschnittes und die Längsachse eine Symmetrieachse dar.

Es kann auch von Vorteil sein, wenn genau zwei Kragenstücke vorhanden sind, deren zweite Fügeflächen zueinander symmetrisch angeordnete Segmente einer Mantelfläche eines Kegelstumpfes oder eines Kugelabschnittes darstellen, und die Längsachse eine Symmetrieachse ist.

Die Montage der Schweißbaugruppe wird vereinfacht, wenn in dem Trägerteil eine Ausnehmung oder ein Durchbruch vorhanden ist und das Aufsetzteil wenigstens teilweise in das Trägerteil eingeführt ist.

Die Aufgabe wird für ein Verfahren zur Herstellung einer Schweißbaugruppe, enthaltend ein Trägerteil, bestehend aus einem für eine Laserstrahlung absorbierenden Material, mit wenigstens einer ersten Fügefläche, und ein Aufsetzteil, eine Längsachse aufweisend, mit wenigstens einem aus einem für die Laserstrahlung transparenten Material bestehenden Kragenstück, das eine zweite Fügefläche mit einem festen Ende und einem freien Ende aufweist und das an einer zur Längsachse parallelen Umfangsfläche des Aufsetzteils angeordnet ist, wobei die wenigstens eine erste Fügefläche und die wenigstens eine zweite Fügefläche einen Fügebereich bilden, über den das Aufsetzteil mit dem Trägerteil, eine Schweißverbindung bildend, verschweißt wird, während eine Andruckkraft auf den Fügebereich wirkt, gelöst.

In einem ersten Verfahrensschritt wird das Aufsetzteil zur Verfügung gestellt. Bei diesem Aufsetzteil besteht das wenigstens eine Kragenstück aus einem elastischen Material und die zweite Fügefläche weist eine Oberflächenkontur auf, die von dem festen Ende zu dem freien Ende hin stetig von der Oberflächenkontur der ersten Fügefläche abweicht. Darüber hinaus ist das Aufsetzteil so ausgeführt, dass in Richtung seiner Längsachse ein Aufnahmedorn aufsetz- bzw. einführbar ist. Mittels des aufgesetzten bzw. eingeführten Aufnahmedorns kann das Aufsetzteil aufgenommen, dem Trägerteil zugeführt, zu diesem positioniert und auf diesem angedrückt werden.

In einem zweiten Verfahrensschritt wird ein Aufnahmedorn in das Aufsetzteil eingeführt bzw. auf diesem aufgesetzt und das Aufsetzteil mittels des Aufnahmedorns gegenüber dem Trägerteil so positioniert, dass sich die wenigstens eine erste und die wenigstens eine zweite Fügefläche gegenüberliegen, bevordas Aufsetzteil dem Trägerteil zugestellt wird, bis es mit dem Trägerteil in Erstberührung gebracht ist.

Vorteilhaft ist die Andruckfläche an dem Aufsetzteil so ausgebildet, dass sie mit einer an dem Aufnahmedorn vorhandenen Kontaktfläche beim Einführen bzw. Aufsetzen des Aufnahmedorns eine in Richtung der Längsachse kraftschlüssige Verbindung bildet.

Anschließend wird über den Aufnahmedorn die Andruckkraft in Richtung der Längsachse in das Aufsetzteil eingeleitet, wobei das Aufsetzteil an das Trägerteil angefügt wird und sich die zweite Fügefläche vom Ort der Erstberührung her kontinuierlich an die erste Fügefläche anschmiegt, bis die erste und die zweite Fügefläche vollständig Flächenkontakt haben. Dabei wird das wenigstens eine Kragenstück gezielt elastisch verformt, sodass Spannungen in das wenigstens eine Kragenstück eingetragen werden.

Anschließend wird die Schweißbaugruppe über die zweite Fügefläche mit Laserstrahlung beaufschlagt, wodurch das Aufsetzteil und das Trägerteil im Fügebereich, eine Schweißverbindung bildend, verschweißt werden und die eingetragenen Spannungen in dem wenigstens einen Kragenstück gelöst werden.

Abschließend wird der Aufnahmedorn aus bzw. von dem Aufsetzteil gezogen.

Bevorzugt wird beim Herausziehen bzw. Abziehen des Aufnahmedorns aus dem Aufsetzteil eine Zugkraft auf die Schweißverbindung ausgeübt, um die Qualität der Schweißverbindung zu kontrollieren.

Die Oberflächenkontur der zweiten Fügefläche kann so gefertigt werden, dass die Abweichung zur Oberflächenkontur der ersten Fügefläche stetig abnehmend ist. Die Andruckkraft wird dann über eine innere Andruckfläche zwischen dem festen Ende und der Längsachse, diese einschließend, eingetragen.

Alternativ kann die Oberflächenkontur der zweiten Fügefläche so gefertigt werden, dass die Abweichung zur Oberflächenkontur der ersten Fügefläche stetig zunehmend ist. Die Andruckkraft wird dann über eine äußere Andruckfläche bezogen auf die Längsachse, außerhalb der zweiten Fügefläche eingetragen.

Nachfolgend soll die Erfindung anhand von Ausführungsbeispielen und Zeichnungen näher erläutert werden.

Hierzu zeigen:
- Fig. 1: ein erstes Ausführungsbeispiel einer Schweißbaugruppe, bei dem das Trägerteil eine ebene erste Fügefläche aufweist und das Aufsetzteil eine zweite Fügefläche aufweist, die von einer Ebene abweichend, mit dem freien Ende dem Trägerteil zugewandt vorgeformt ist,
- Fig. 2: ein zweites Ausführungsbeispiel einer Schweißbaugruppe, bei dem das Trägerteil eine konvexe erste Fügefläche aufweist und das Aufsetzteil eine zweite Fügefläche aufweist, die von einer Ebene abweichend, mit dem freien Ende dem Trägerteil zugewandt vorgeformt ist,
- Fig. 3: ein drittes Ausführungsbeispiel einer Schweißbaugruppe, bei dem das Trägerteil eine konkave erste Fügefläche aufweist und das Aufsetzteil eine zweite Fügefläche aufweist, die von einer Ebene abweichend, mit dem freien Ende dem Trägerteil zugewandt vorgeformt ist,
- Fig. 4: ein viertes Ausführungsbeispiel einer Schweißbaugruppe, bei dem das Trägerteil eine konvexe erste Fügefläche aufweist und das Aufsetzteil eine zweite Fügefläche aufweist, die eine Planfläche darstellt,
- Fig. 5: ein fünftes Ausführungsbeispiel einer Schweißbaugruppe, bei dem das Trägerteil eine konkave erste Fügefläche aufweist und das Aufsetzteil eine zweite Fügefläche aufweist, die eine Planfläche darstellt,
- Fig. 6: ein sechstes Ausführungsbeispiel einer Schweißbaugruppe, bei dem das Trägerteil eine ebene erste Fügefläche aufweist und das Aufsetzteil eine zweite Fügefläche aufweist, die von einer Ebene abweichend, mit dem freien Ende vom Trägerteil abgewandt vorgeformt ist,
- Fig. 7: ein siebentes Ausführungsbeispiel einer Schweißbaugruppe, bei dem das Trägerteil eine konvexe erste Fügefläche aufweist und das Aufsetzteil eine zweite Fügefläche aufweist, die von einer Ebene abweichend, mit dem freien Ende vom Trägerteil abgewandt vorgeformt ist,
- Fig. 8: ein achtes Ausführungsbeispiel einer Schweißbaugruppe, bei dem das Trägerteil eine konkave erste Fügefläche aufweist und das Aufsetzteil eine zweite Fügefläche aufweist, die von einer Ebene abweichend, mit dem freien Ende vom Trägerteil abgewandt vorgeformt ist,
- Fig. 9: eine erste Modifikation des Aufsetzteils für alle Ausführungsbeispiele von Schweißbaugruppen,
- Fig. 10: eine zweite Modifikation des Aufsetzteils für alle Ausführungsbeispiele von Schweißbaugruppen,
- Fig. 11a-f: verschiedene Beispiele für Gestaltungen der Kragenstücke für alle Ausführungsbeispiele von Schweißbaugruppen mit einer zweiten Fügefläche, die von einer Ebene abweichend zum Trägerteil hin vorgeformt ist,
- Fig. 12a-e: verschiedene Beispiele für Gestaltungen der Kragenstücke für alle Ausführungsbeispiele von Schweißbaugruppen mit einer zweiten Fügefläche, die von einer Ebene abweichend vom Trägerteil weg vorgeformt ist und
- Fig. 13a-b: Draufsichten auf Beispiele von möglichen Außenkonturen für alle Ausführungsbeispiele von Schweißbaugruppen.

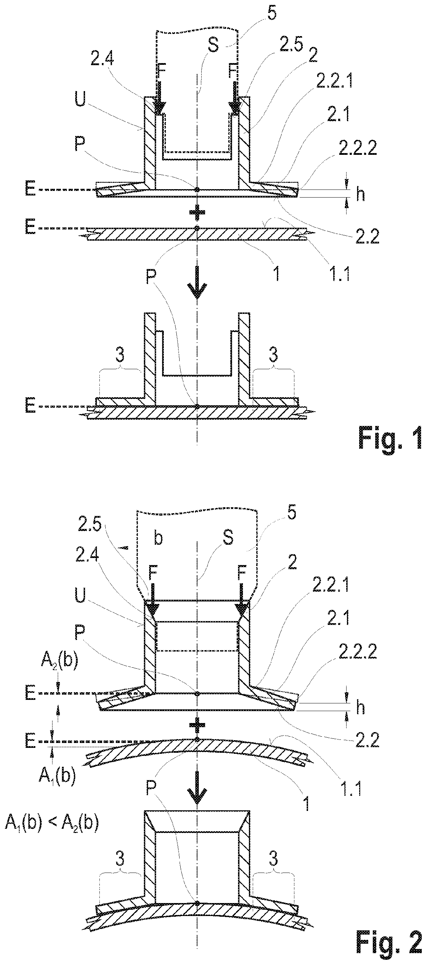

Da die unterschiedlich ausgeführten Oberflächenkonturen der jeweils einen Fügebereich bildenden ersten und zweiten Fügeflächen 1.1, 2.2 an der fertigen Schweißbaugruppe nicht mehr zu erkennen sind, zeigen die Zeichnungen in den Fig. 1 bis 8 zusätzlich zu einer fertig verschweißten Schweißbaugruppe das Trägerteil 1 und das Aufsetzteil 2 vor dem Verschweißen zueinander positioniert, aber noch nicht in Berührung stehend, sodass sich die Kragenstücke 2.1, die in allen Ausführungsformen der Schweißbaugruppe während des Anfügens verformt und damit gespannt werden, in einem entspannten Zustand befinden. Der Querschnitt der Kragenstücke 2.1 und damit auch die Form der zweiten Fügeflächen 2.2 ist hier nicht näher ausgeführt.

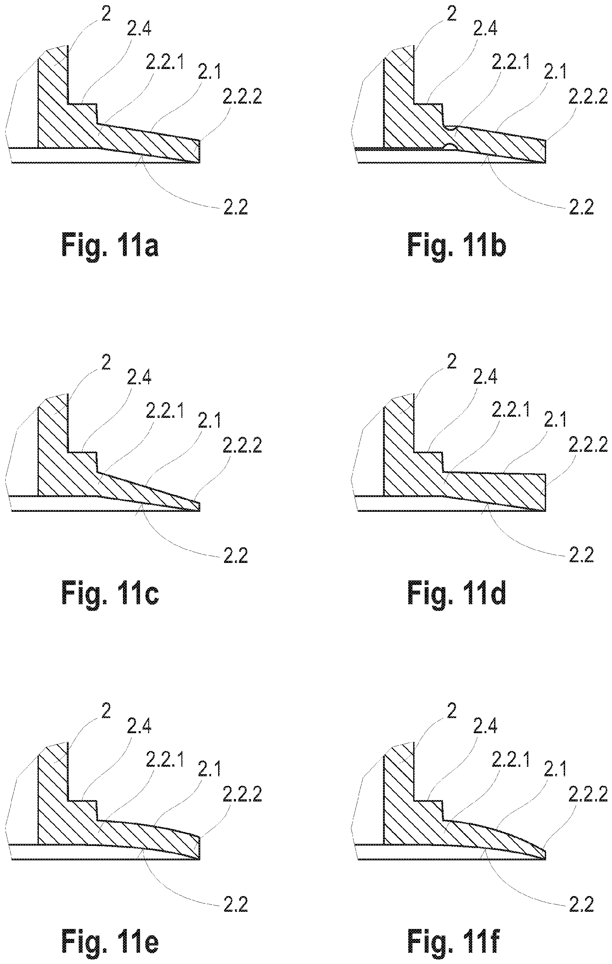

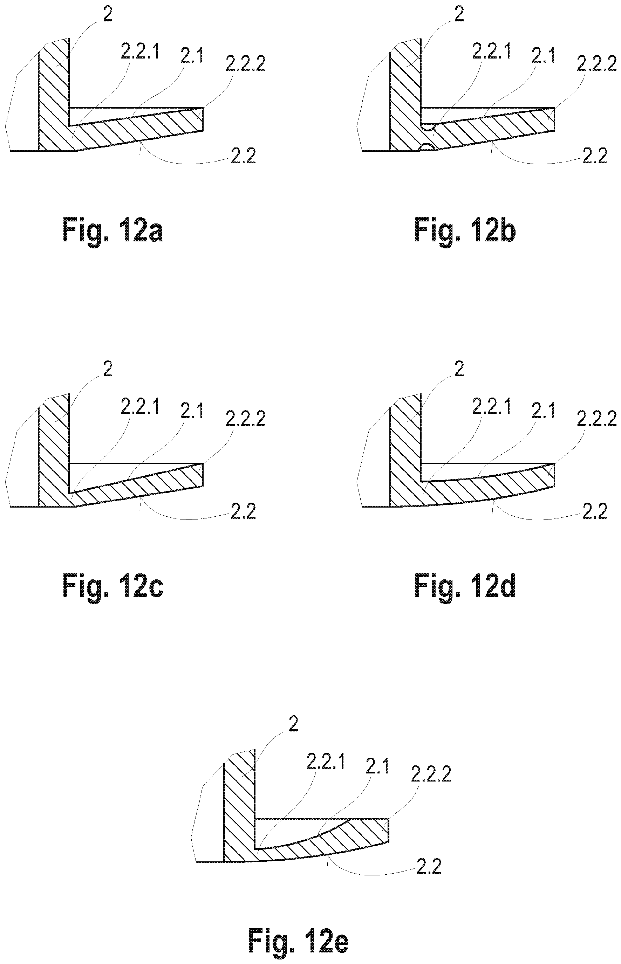

Beispiele hierfür sind in den Fig. 11a-f und 12a-e dargestellt.

In den Fig. 1, 2, 3 und 4 ist jeweils eine Ausführung eines Aufnahmedorns durch eine Strichlinie angedeutet. Die Ausführungen des Aufnahmedorns sind nicht an die jeweils dargestellten Ausführungen der Kragenstücke gebunden, sondern auch mit jeweils anderen Ausführungen der Kragenstücke kombinierbar.

Eine erfindungsgemäße Schweißbaugruppe, wie sie in allen Fig. 1 bis 8 gezeigt ist, besteht grundsätzlich aus einem Trägerteil 1 und einem Aufsetzteil 2. Das Trägerteil 1 ist aus einem eine zum Lasertransmissionsschweißen geeignete Laserstrahlung absorbierenden Material hergestellt und weist wenigstens eine erste Fügefläche 1.1 auf. Das Aufsetzteil 2 weist eine Längsachse S und wenigstens ein aus einem für die Laserstrahlung transparenten Material bestehendes Kragenstück 2.1 mit einer zweiten Fügefläche 2.2 auf, welches an einer zur Längsachse S parallelen Umfangsfläche U des Aufsetzteils 2 orthogonal zur Längsachse S ausgebildet ist.

Der Einfachheit halber soll zur Beschreibung der Erfindung davon ausgegangen werden, dass das Aufsetzteil 2 einen kreisförmigen Querschnitt hat, sodass die Längsachse S eine Symmetrieachse und die Umfangsfläche U einen Zylindermantel darstellt. Das wenigstens eine Kragenstück 2.1 weist ein freies Ende 2.2.2 und ein mit der Umfangsfläche U des Aufsetzteils 2 verbundenes festes Ende 2.2.1 auf. Grundsätzlich kann das Aufsetzteil 2 einen beliebigen, auch freigeformten Querschnitt aufweisen. Auch muss sich die zur Längsachse S parallel verlaufende Umfangsfläche U nicht über die gesamte Höhe des Aufsetzteils 2 oder den gesamten Umfang des Aufsetzteils 2 erstrecken.

Wenn das Aufsetzteil 2 nur ein Kragenstück 2.1 aufweist, dann handelt es sich vorteilhaft um ein das Aufsetzteil 2 vollständig umschließendes Kragenstück 2.1.

Mehrere Kragenstücke 2.1 sind vorteilhaft gleichmäßig an der Umfangsfläche U in einer gleichen Höhe bezogen auf die Längsachse S angeordnet, sie können aber auch hiervon abweichend in unterschiedlichen Höhen angeordnet sein. Der Einfachheit halber wird bei den nachfolgenden Ausführungsbeispielen jeweils von nur einem Kragenstück 2.1 ausgegangen, wobei die Aussagen hierzu gegebenenfalls auf die mehreren Kragenstücken 2.1 zutreffen.

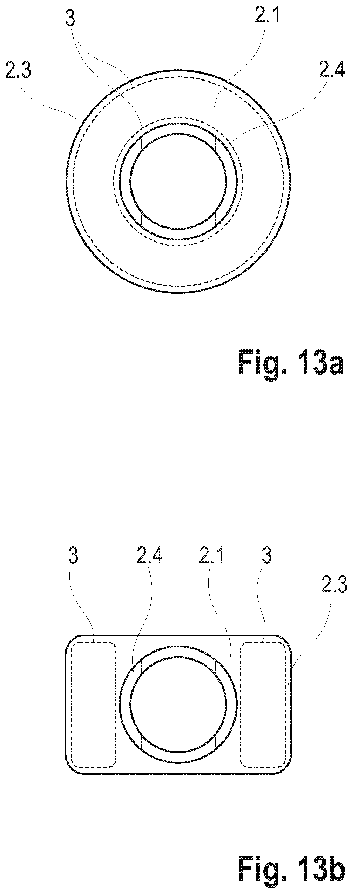

Im Falle eines achssymmetrischen Aufsetzteils 2 (siehe Fig. 13b) oder eines rotationssymmetrischen Aufsetzteils 2 (siehe Fig. 13a) stellt die Längsachse S eine Symmetrieachse dar.

Jeweils eine der ersten Fügeflächen 1.1 und eine der zweiten Fügeflächen 2.2 bilden miteinander einen Fügebereich 3, über den das Aufsetzteil 2 mit dem Trägerteil 1 verschweißt ist.

Es ist wesentlich, dass das wenigstens eine Kragenstück 2.1 elastisch ist und die zweite Fügefläche 2.2 auf einen gedachten Bezugspunkt P bezogen, der auf der Längsachse S und innerhalb der ersten Fügefläche 1.1 liegt, vor dem Fügen eine Oberflächenkontur aufweist, die an jeder Stelle von einer Oberflächenkontur der ersten Fügefläche 1.1 bezogen auf den gleichen Bezugspunkt P abweicht. Die Abweichung ist vom festen Ende 2.2.1 der zweiten Fügefläche 2.2 zu deren freiem Ende 2.2.2 hin stetig ab- oder zunehmend.

In den Fig. 1, 2 und 3 sind drei Ausführungsbeispiele für Schweißbaugruppen gezeigt, bei denen das Kragenstück 2.1 mit dem freien Ende 2.2.2 dem Trägerteil 1 zugewandt, von einer Ebene E durch den gedachten Bezugspunkt P abweichend vorgeformt ist.

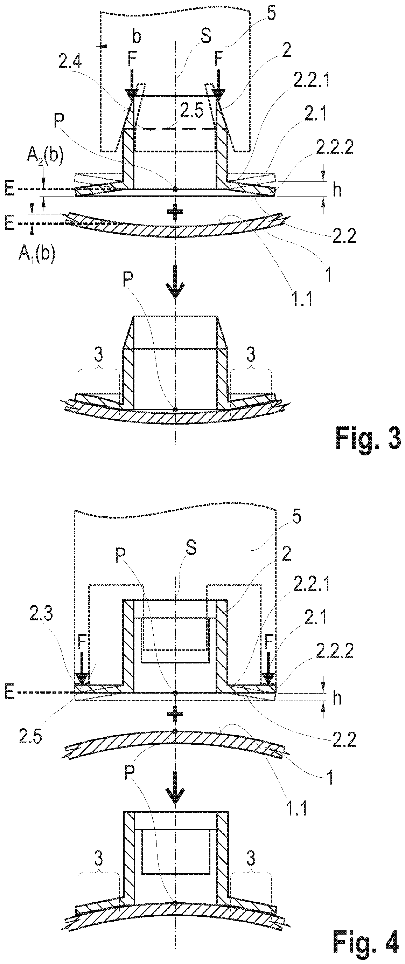

Die Oberflächenkontur der ersten Fügefläche 1.1 ist gemäß dem ersten Ausführungsbeispiel (Fig. 1) plan, gemäß dem zweiten Ausführungsbeispiel (Fig. 2) konvex und gemäß dem dritten Ausführungsbeispiel (Fig. 3) konkav.

Das Kragenstück 2.1 gemäß dem zweiten Ausführungsbeispiel (Fig. 2) ist so dimensioniert, dass die erste Fügefläche 1.1 an jeder Stelle bezogen auf den gedachten Bezugspunkt P eine geringere Abweichung A₁ mit gleichem Richtungssinn von der durch den Bezugspunkt P gedachten Ebene E aufweist, als die zweite Fügefläche 2.2 an gleicher Stelle eine Abweichung A₂ von der Ebene E aufweist. Mit zunehmendem Abstand b vom gedachten Bezugspunkt P nimmt die Abweichung der Oberflächenkonturen zueinander vom festen Ende 2.2.1 der zweiten Fügefläche 2.2 zu deren freiem Ende 2.2.2 hin stetig ab. Gleiches trifft auch auf das erste und dritte Ausführungsbeispiel zu.

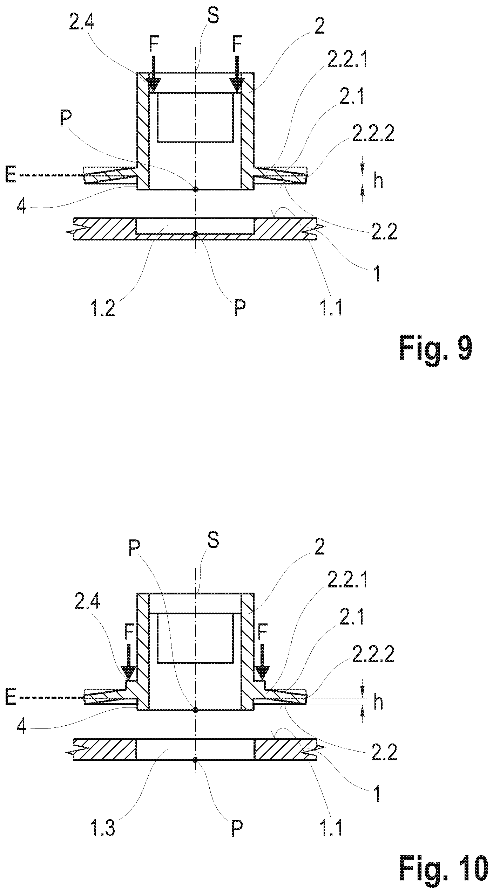

Die Aufsetzteile 2 der drei Ausführungsbeispiele weisen jeweils eine innere Andruckfläche 2.4 auf, das heißt eine Andruckfläche, die zwischen dem festen Ende 2.2.1 und der Längsachse S liegt. Bei Aufsetzteilen 2, die so auf ein Trägerteil 1 geschweißt sind, dass deren Längsachse S mit einem auf der ersten Fügefläche 1.1 des Trägerteils 1 stehenden Lot zusammenfällt, liegt die innere Andruckfläche 2.4 für eine optimale Übertragung der Andruckkraft F, wie in Fig. 1 schematisch dargestellt, in einer zur Längsachse S senkrecht verlaufenden Ebene. Ein mit Strichlinien dargestellter, in das Aufsetzteil 2 eingeführter Aufnahmedorn 5 liegt mit einer Kontaktfläche 2.5 an dieser inneren Andruckfläche 2.4 an. Die Schweißbaugruppe kann in anderen Ausführungen, die hier nicht weiter erläutert werden, auch so ausgeführt sein, dass die Längsachse S mit einem auf der ersten Fügefläche 1.1 des Trägerteils 1 stehenden Lot einen spitzen Winkel einschließt. Die innere Andruckfläche 2.4 schließt dann für eine optimale Kraftübertragung einen entsprechenden Komplementärwinkel mit der Längsachse S ein. Die innere Andruckfläche 2.4 ist hier in Fig. 1 innerhalb der Umfangsfläche U des Aufsetzteils 2 dargestellt, kann aber ebenso wie in Fig. 10 dargestellt am Kragenstück 2.1 außerhalb der Umfangsfläche U des Aufsetzteils 2 und an das feste Ende 2.2.1 der zweiten Fügefläche 2.2 angrenzend ausgebildet sein.

Gemäß den Fig. 2 und 3 sind die inneren Andruckflächen 2.4 um die Längsachse S angeordnete konische Flächen, die zum einen eine Innenumfangsfläche und zum anderen die äußere Umfangsfläche U des Aufsetzteils 2 begrenzen. An dem jeweils mit Strichlinien dargestellten eingeführten bzw. aufgesetzten Aufnahmedorn 5 sind dementsprechende Kontaktflächen 2.5 ausgebildet. Durch ein mehr oder weniger tiefes Einführen bzw. Aufsetzen der Kontaktflächen 2.5 auf diese inneren Andruckflächen 2.4 wird ein höherer oder geringerer Kraftschluss erzeugt, zu dessen Lösung es eine entsprechende höhere oder geringere Zugkraft erfordert. Um einer geforderten Qualität zu entsprechen, muss die Schweißverbindung einer vorgegebenen Zugkraft standhalten. Entsprechend dieser vorgegebenen Zugkraft werden der Aufnahmedorn 5 und das Aufsetzteil 2 dimensioniert, so dass eine kraftschlüssige Verbindung zwischen beiden hergestellt werden kann, zu deren Lösung die vorgegebene Zugkraft erforderlich ist.

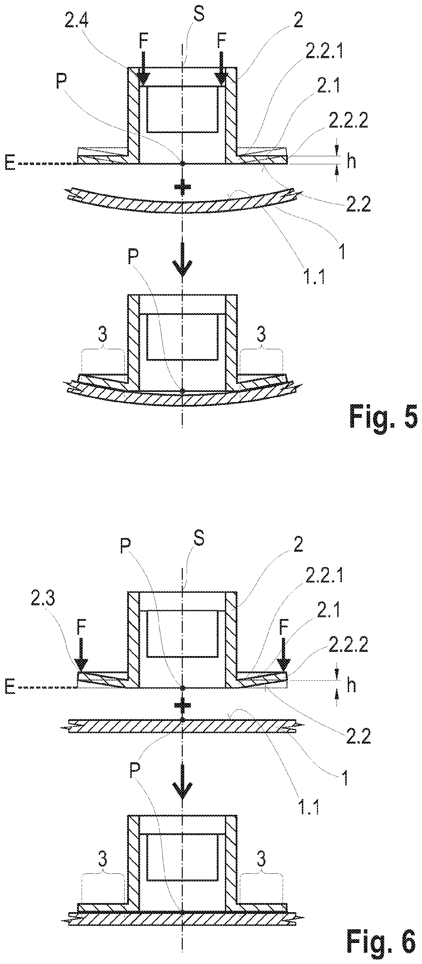

In den Fig. 4 und 5 sind ein viertes und fünftes Ausführungsbeispiel gezeigt.

Das Kragenstück 2.1 weist hier eine ebene zweite Fügefläche 2.2 auf und ist jeweils mit einem Trägerteil 1 verschweißt, welches eine konvexe bzw. eine konkave Form aufweist.

Eine Ausführung gemäß dem vierten Ausführungsbeispiel (Fig. 4) kann im Vergleich zum zweiten Ausführungsbeispiel (Fig. 2) ausreichend sein, wenn die erste Fügefläche 1.1 vergleichsweise stärker gekrümmt ist, sodass auch mit einer ebenen zweiten Fügefläche 2.2 ein hinreichend großer Zustellweg h ermöglicht wird, oder wenn an dem Aufsetzteil 2 keine innere Andruckfläche 2.4 installierbar ist. Die Einleitung einer Andruckkraft F muss in dieser Ausführung über eine äußere Andruckfläche 2.3 erfolgen, da im Unterschied zu den vorgenannten Ausführungsbeispielen, bei denen beim Anfügen des Aufsetzteils 2 an das Trägerteil 1 der Erstkontakt der zweiten Fügefläche 2.2 mit der ersten Fügefläche 1.1 am freien Ende 2.2.2 entsteht, hier der Erstkontakt am festen Ende 2.2.1 entsteht. Das heißt, die zweite Fügefläche 2.2 wird hier beginnend vom festen Ende 2.2.1 zum freien Ende 2.2.2 hin an die erste Fügefläche 1.1 geschmiegt. Eine äußere Andruckfläche 2.3 kann immer nur bezogen auf die Längsachse S außerhalb der zweiten Fügefläche 2.2 liegen, sodass hier das Kragenstück 2.1 um eine äußere Andruckfläche 2.3 größer ausgeführt ist. Anhand des vierten Ausführungsbeispieles, gezeigt in Fig. 4, ist eine weitere Ausführung des Aufnahmedorns 5 dargestellt. Wie der Aufnahmedorn 5 mit dem Aufsetzteil 2 verbunden ist, ist ebenso wie in Fig. 1 nicht dargestellt. Hierfür sind formschlüssige Verbindungen z. B. durch einen Rastmechanismus oder eine Verspanneinrichtung vorstellbar. Die Kontaktfläche 2.5 ist hier gegenüberliegend der äußeren Andruckfläche 2.3 vorhanden.

Bei einer Ausführung gemäß dem fünften Ausführungsbeispiel (Fig. 5) muss die Andruckkraft F wiederum, gleich den ersten drei Ausführungsbeispielen, über eine innere Andruckfläche 2.4 eingebracht werden, da hier ebenfalls der Erstkontakt am freien Ende 2.2.2 entsteht. Das heißt, die zweite Fügefläche 2.2 wird hier beginnend vom freien Ende 2.2.2 zum festen Ende 2.2.1 hin an die erste Fügefläche 1.1 geschmiegt.

In den Fig. 6, 7 und 8 sind drei Ausführungsbeispiele für Schweißbaugruppen gezeigt, bei denen das Kragenstück 2.1 mit dem freien Ende 2.2.2 vom Trägerteil 1 abgewandt, von einer Ebene E durch den gedachten Bezugspunkt P abweichend vorgeformt ist.

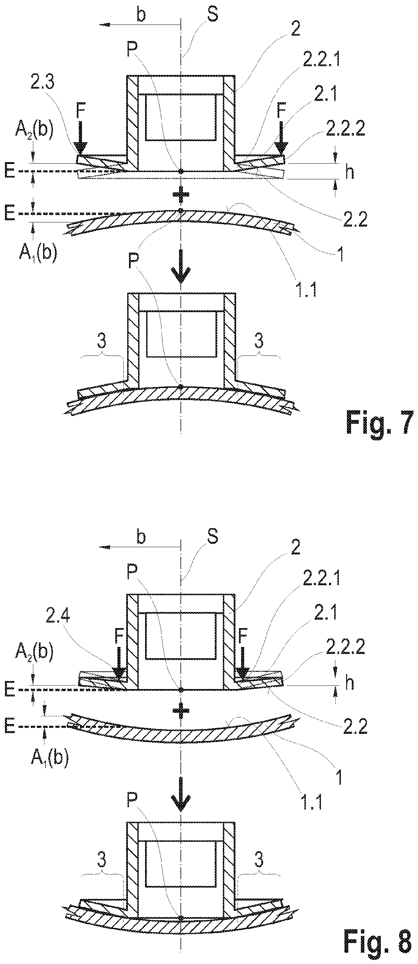

Die Oberflächenkontur der ersten Fügefläche 1.1 ist gemäß dem sechsten Ausführungsbeispiel (Fig. 6) plan, gemäß dem siebenten Ausführungsbeispiel (Fig. 7) konvex und gemäß dem achten Ausführungsbeispiel (Fig. 8) konkav.

Dabei weisen die Aufsetzteile 2 gemäß dem sechsten und siebenten Ausführungsbeispiel jeweils eine äußere Andruckfläche 2.3 und das Aufsetzteil 2 gemäß dem achten Ausführungsbeispiel bei einer entsprechend starken Krümmung der ersten Fügefläche 1.1 eine innere Andruckfläche 2.4 auf.

Nach Fig. 8 erfährt das Kragenstück 2.1 in Abhängigkeit von der Formabweichung zwischen der ersten und der zweiten Fügefläche 1.1, 2.2 beim Fügen eine Verformung und das freie Ende 2.2.2 des Kragenstückes 2.1 wird um einen davon abhängigen Zustellweg h ausgelenkt.

Wenn man davon ausgeht, dass in der Regel die Oberflächenform des Trägerteils 1 und der Ort, an dem das Aufsetzteil 2 aufgeschweißt werden soll, vorgegeben sind, ist es mit der erfindungsgemäßen Idee möglich, das Aufsetzteil 2 so zu konzipieren, dass eine Schweißbaugruppe hoher Qualität hergestellt werden kann, ohne dass eine oder mehrere zum Verschweißen mit Trägerteil 1 vorgesehene Fügeflächen am Aufsetzteil 2 (zweite Fügeflächen 2.2) exakt auf die Oberflächenkontur zugeordneter Bereiche der Oberfläche des Trägerteils 1, die dann dessen Fügeflächen (erste Fügeflächen 1.1) darstellen, angepasst werden müssen. Auch werden beim Herstellen erfindungsgemäßer Schweißbaugruppen vergleichsweise nur geringere Andruckkräfte F erforderlich, da sich die zweiten Fügeflächen 2.2 elastisch an die ersten Fügeflächen 1.1 anschmiegen. Die Andruckkraft F muss nur so groß sein, dass sich das Kragenstück 2.1 zumindest im Fügebereich 3 komplett anschmiegt.

Um die Andruckkraft F in einem zur Herstellung der Schweißverbindung ausreichenden Maß in den Fügebereich 3 einzutragen, kann das Kragenstück 2.1, unabhängig davon, ob es mit dem freien Ende 2.2.2 vom Trägerteil 1 ab- oder ihm zugewandt, von einer Ebene E abweichend vorgeformt ist und wie groß die Abweichung ist, unterschiedliche Querschnittsformen aufweisen, wie sie beispielhaft in den Fig. 11a-f und 12a-e gezeigt sind.

Weist das Aufsetzteil 2 nur ein Kragenstück 2.1 auf, welches vorteilhaft, wie in Fig. 13a gezeigt, einen geschlossenen Ring bildet, kann die zweite Fügefläche 2.2 z. B. wie in den Fig. 11a und 12a eine Mantelfläche eines Kegelstumpfes darstellen. Die Dicke des Kragenstückes 2.1 ist konstant.

Die Kragenstücke 2.1 entsprechend den Fig. 11b und 12b unterscheiden sich zu den in den Fig. 11a und 12a gezeigten dadurch, dass das feste Ende 2.2.1 verjüngt ist, womit je nach Stärke der Verjüngung das hier gebildete Festkörpergelenk weicher wird.

Die Elastizität der Kragenstücke 2.1 über ihre Länge zwischen dem festen und dem freien Ende 2.2.1, 2.2.2 kann beeinflusst werden, indem die Dicke zum freien Ende 2.2.2 hin ab- oder zunehmend gestaltet wird, wie in den Fig. 11c, 11d und 12c angedeutet.

Die zweite Fügefläche 2.2 kann auch wie in den Fig. 11e und 12d durch die Mantelfläche eines Kugelabschnittes gebildet werden, dessen Dicke konstant sein kann oder aber, wie in den Fig. 11f und 12e angedeutet, zum freien Ende 2.2.2 hin größer oder kleiner wird.

Mit all diesen Maßnahmen lässt sich unabhängig von der Materialwahl für das Kragenstück 2.1 dessen Elastizität beeinflussen.

Insbesondere, wenn ein das Aufsetzteil 2 umschließender Fügebereich 3 gewünscht wird, der besonders belastbar ist, ist eine erfindungsgemäße Schweißbaugruppe vorteilhaft. Da sich hier der nur eine Fügebereich 3 über eine große Oberfläche am Trägerteil 1 erstreckt, ist der Effekt gegenüber dem Stand der Technik besonders deutlich. Je größer die Fügeflächen 1.1, 2.2 sind, um so aufwändiger ist es, diese wie im Stand der Technik erforderlich so genau aneinander anzupassen, dass sie spaltfrei miteinander verschweißt werden können.

Die Schweißbaugruppe kann aber vorteilhaft auch mehrere Kragenstücke 2.1 aufweisen, insbesondere wenn für ein das Aufsetzteil 2 vollständig umschließendes Kragenstück 2.1 kein Platz ist. Gleich dem Stand der Technik können z. B., wie in Fig. 13b gezeigt, zwei Kragenstücke 2.1 symmetrisch zur Längsachse S angeordnet sein. Die Form der zweiten Fügeflächen 2.2 könnte hier auch Segmenten einer Kegelmantelfläche entsprechen.

Stattdessen können aber auch am Umfang verteilt mehr als zwei Kragenstücke 2.1 vorhanden sein. Sie sind gegebenenfalls vorteilhaft gleichmäßig verteilt angeordnet.

In den Fig. 11a-f ist jeweils eine innere Andruckfläche 2.4 gezeigt. Sie kann zusätzlich oder alternativ zu einer inneren Andruckfläche 2.4 vorhanden sein, die innerhalb der Umfangsfläche U des Aufsetzteils 2 angeordnet ist, wie in den Fig. 1 bis 8 gezeigt.

Die Fig. 9 und 10 zeigen gegenüber den Ausführungsbeispielen gemäß den Fig. 1 bis 8 als zusätzliches Merkmal am Aufsetzteil 2 einen Einführstutzen 4, der in seiner Umfangsform an die Form einer Ausnehmung 1.2 (Fig. 9) oder eines Durchbruches 1.3 (Fig. 10) im Trägerteil 1 angepasst ist. Anstelle des Einführstutzens 4 kann das Kragenstück 2.1 auch vergleichsweise höher an der Umfangsfläche U angesetzt sein, sodass die Umfangsfläche U aus dem Kragenstück 2.1 herausragt. Über den Einführstutzen 4 oder den herausragenden Teil des Kragenstückes 2.1 ist dieses in die Ausnehmung 1.2 oder den Durchbruch 1.3 eingeführt. Dadurch wird zum einen die Positionierung des Aufsetzteiles 2 zum Trägerteil 1 erleichtert und zum anderen die Stabilität der Schweißbaugruppe erhöht. Das ist insbesondere dann sinnvoll, wenn die Elastizität des Kragenstückes 2.1 vornehmlich über die Materialwahl und nicht über die Dimensionierung des Kragenstückes 2.1 erreicht wird.

### Bezugszeichenliste

- 1: Trägerteil
- 1.1: erste Fügefläche
- 1.2: Ausnehmung
- 1.3: Durchbruch
- 2: Aufsetzteil
- 2.1: Kragenstück
- 2.2: zweite Fügefläche
- 2.2.1: festes Ende
- 2.2.2: freies Ende
- 2.3: äußere Andruckfläche
- 2.4: innere Andruckfläche
- 2.5: Kontaktfläche
- 3: Fügebereich
- 4: Einführstutzen
- 5: Aufnahmedorn

- S: Längsachse
- E: Ebene
- P: Bezugspunkt
- U: Umfangsfläche
- A₁: Abweichung (der ersten Fügefläche 1.1 von der Ebene E)
- A₂: Abweichung (der zweiten Fügefläche 2.2 von der Ebene E)
- F: Andruckkraft
- h: Zustellweg
- b: Abstand

## Patentansprüche

1. Schweißbaugruppe mit einem Trägerteil (1), aus einem für eine Laserstrahlung absorbierenden Material mit wenigstens einer ersten Fügefläche (1.1), und einem Aufsetzteil (2), mit einer Längsachse (S) und wenigstens einem aus einem für die Laserstrahlung transparenten Material bestehenden Kragenstück (2.1), das eine zweite Fügefläche (2.2) mit einem festen Ende (2.2.1) und einem freien Ende (2.2.2) aufweist und das an einer zur Längsachse (S) parallelen Umfangsfläche (U) des Aufsetzteils (2) angeordnet ist, wobei die wenigstens eine erste Fügefläche (1.1) und die wenigstens eine zweite Fügefläche (2.2) einen Fügebereich (3) bilden, über den das Aufsetzteil (2) mit dem Trägerteil (1), eine Schweißverbindung bildend, verschweißt ist, und an dem Aufsetzteil (2) wenigstens eine Andruckfläche vorhanden ist, über die bei der Herstellung der Schweißbaugruppe eine auf den Fügebereich (3) wirkende Andruckkraft (F) eingeleitet wird, wobei
das wenigstens eine Kragenstück (2.1) elastisch ist und auf oder in das Aufsetzteil (2) in Richtung der Längsachse (S) ein Aufnahmedorn (5) aufsetz- bzw. einführbar ist, um das Aufsetzteil (2) aufzunehmen, dem Trägerteil (1) zuzuführen, auf dem Trägerteil (1) zu positionieren und auf diesem über die wenigstens eine Andruckfläche anzudrücken, **dadurch gekennzeichnet,**
**dass** die zweite Fügefläche (2.2) bezogen auf einen gedachten Bezugspunkt (P), der auf der Längsachse (S) und innerhalb der ersten Fügefläche (1.1) liegt, vor dem Fügen eine Oberflächenkontur aufweist, die von der Oberflächenkontur der ersten Fügefläche (1.1) bezogen auf den gleichen Bezugspunkt (P) vom festen Ende (2.2.1) zum freien Ende (2.2.2) hin stetig ab- oder zunehmend abweicht.

2. Schweißbaugruppe nach Anspruch 1, **dadurch gekennzeichnet, dass** die wenigstens eine Andruckfläche so ausgebildet ist, dass sie mit einer an dem aufgesetzten bzw. eingeführten Aufnahmedorn (5) vorhandenen Kontaktfläche (2.5) eine in Richtung der Längsachse (S) wirkende kraftschlüssige Verbindung bildet.

3. Schweißbaugruppe nach Anspruch 1 oder 2, **dadurch gekennzeichnet, dass** das wenigstens eine Kragenstück (2.1) von einer Ebene (E) durch den gedachten Bezugspunkt (P) abweichend, mit dem freien Ende (2.2.2) dem Trägerteil (1) zugewandt vorgeformt ist, wobei die Oberflächenkontur der ersten Fügefläche (1.1) plan ist oder an jeder Stelle bezogen auf den gedachten Bezugspunkt (P) eine kleinere Abweichung (A₁) mit gleichem Richtungssinn von der durch den Bezugspunkt (P) gedachten Ebene (E) aufweist, als die zweite Fügefläche (2.2) an gleicher Stelle eine Abweichung (A₂) von der Ebene (E) aufweist, und die wenigstens eine Andruckfläche eine innere Andruckfläche (2.4) ist, die zwischen der Längsachse (S) und der zweiten Fügefläche (2.2) angeordnet ist.

4. Schweißbaugruppe nach Anspruch 1 oder 2, **dadurch gekennzeichnet, dass** das wenigstens eine Kragenstück (2.1) von einer Ebene (E) durch den gedachten Bezugspunkt (P) abweichend, mit dem freien Ende (2.2.2) dem Trägerteil (1) zugewandt vorgeformt ist, wobei die Oberflächenkontur der ersten Fügefläche (1.1) an jeder Stelle bezogen auf den gedachten Bezugspunkt (P) eine Abweichung (A₁) von der durch den Bezugspunkt (P) gedachten Ebene (E) aufweist, mit entgegengesetztem Richtungssinn zu einer Abweichung (A₂) der zweiten Fügefläche (2.2) von der Ebene (E) an gleicher Stelle, und die wenigstens eine Andruckfläche eine innere Andruckfläche (2.4) ist, die zwischen der Längsachse (S) und der zweiten Fügefläche (2.2) angeordnet ist.

5. Schweißbaugruppe nach Anspruch 3 oder 4, **dadurch gekennzeichnet, dass** die innere Andruckfläche (2.4) eine bezogen auf die Längsachse (S) konische Fläche ist.

6. Schweißbaugruppe nach Anspruch 1, **dadurch gekennzeichnet, dass** das wenigstens eine Kragenstück (2.1) von einer Ebene (E) durch den gedachten Bezugspunkt (P) abweichend, mit dem freien Ende (2.2.2) vom Trägerteil (1) abgewandt vorgeformt ist, wobei die Oberflächenkontur der ersten Fügefläche (1.1) plan ist oder an jeder Stelle bezogen auf den gedachten Bezugspunkt (P) eine Abweichung (A₁) von der durch den Bezugspunkt (P) gedachten Ebene (E) aufweist, mit entgegengesetztem Richtungssinn zu einer Abweichung (A₂) der zweiten Fügefläche (2.2) von der Ebene (E) an gleicher Stelle, und die wenigstens eine Andruckfläche eine äußere Andruckfläche (2.3) ist, die bezogen auf die Längsachse (S) außerhalb der zweiten Fügefläche (2.2) angeordnet ist.

7. Schweißbaugruppe nach Anspruch 1, **dadurch gekennzeichnet, dass** das wenigstens eine Kragenstück (2.1) von einer Ebene (E) durch den gedachten Bezugspunkt (P) abweichend, mit dem freien Ende (2.2.2) vom Trägerteil (1) abgewandt vorgeformt ist, wobei die Oberflächenkontur der ersten Fügefläche (1.1) an jeder Stelle bezogen auf den gedachten Bezugspunkt (P) eine kleinere Abweichung (A₁) mit gleichem Richtungssinn von der durch den Bezugspunkt (P) gedachten Ebene (E) aufweist, als die zweite Fügefläche (2.2) an gleicher Stelle eine Abweichung (A₂) von der Ebene (E) aufweist, und die wenigstens eine Andruckfläche eine innere Andruckfläche (2.4) ist, die bezogen auf die Längsachse (S) innerhalb der zweiten Fügefläche (2.2) angeordnet ist.

8. Schweißbaugruppe nach einem der vorhergehenden Ansprüche, **dadurch gekennzeichnet, dass** genau ein Kragenstück (2.1) vorhanden ist und die zweite Fügefläche (2.2) eine Mantelfläche eines Kegelstumpfes oder eines Kugelabschnittes und die Längsachse (S) eine Symmetrieachse darstellt.

9. Schweißbaugruppe nach einem der vorhergehenden Ansprüche, **dadurch gekennzeichnet, dass** in dem Trägerteil (1) eine Ausnehmung (1.2) oder ein Durchbruch (1.3) vorhanden ist und das Aufsetzteil (2) wenigstens teilweise in das Trägerteil (1) eingeführt ist.

10. Verfahren zur Herstellung einer Schweißbaugruppe, enthaltend ein Trägerteil (1), bestehend aus einem für eine Laserstrahlung absorbierenden Material, mit wenigstens einer ersten Fügefläche (1.1), und ein Aufsetzteil (2), eine Längsachse (S) aufweisend, mit wenigstens einem aus einem für die Laserstrahlung transparenten elastischen Material bestehenden Kragenstück (2.1), das eine zweite Fügefläche (2.2) mit einer Oberflächenkontur aufweist, die von einem festen Ende (2.2.1) zu einem freien Ende (2.2.2) hin stetig von der Oberflächenkontur der ersten Fügefläche (1.1) abweicht, wobei das wenigstens eine Kragenstück (2.1) an einer zur Längsachse (S) parallelen Umfangsfläche (U) des Aufsetzteils (2) angeordnet ist und die wenigstens eine erste Fügefläche (1.1) und die wenigstens eine zweite Fügefläche (2.2) einen Fügebereich (3) bilden, über den das Aufsetzteil (2) mit dem Trägerteil (1), eine Schweißverbindung bildend, verschweißt wird, während eine Andruckkraft (F) auf den Fügebereich (3) wirkt, wobei das Aufsetzteil (2) in Richtung seiner Längsachse (S) von einem Aufnahmedorn (5) aufgenommen und mittels des Aufnahmedorns (5) dem Trägerteil (1) zugeführt, zu diesem positioniert und auf diesem angedrückt wird,
wobei das Aufsetzteil (2) mittels des Aufnahmedorns (5) gegenüber dem Trägerteil (1) so positioniert wird, dass sich die wenigstens eine erste und die wenigstens eine zweite Fügefläche (1.1, 2.2) gegenüberliegen und dass das Aufsetzteil (2) dem Trägerteil (1) zugestellt wird, bis es mit dem Trägerteil (1) in Erstberührung gebracht ist,
die Andruckkraft (F) über den Aufnahmedorn (5) in Richtung der Längsachse (S) in das Aufsetzteil (2) eingeleitet wird, wobei das Aufsetzteil (2) an das Trägerteil (1) angefügt wird und sich die zweite Fügefläche (2.2) vom Ort der Erstberührung her kontinuierlich an die erste Fügefläche (1.1) anschmiegt, bis die erste und die zweite Fügefläche (1.1, 2.2) vollständig Flächenkontakt haben, wobei das wenigstens eine Kragenstück (2.1) gezielt elastisch verformt wird, sodass Spannungen in das wenigstens eine Kragenstück (2.1) eingetragen werden, und die Schweißbaugruppe über die zweite Fügefläche (2.2) mit Laserstrahlung beaufschlagt wird, wodurch das Aufsetzteil (2) und das Trägerteil (1) im Fügebereich (3) verschweißt werden und die Spannungen gelöst werden.

11. Verfahren nach Anspruch 10, **dadurch gekennzeichnet, dass** während des Aufnehmens des Aufsetzteils (2) durch den Aufnahmedorn (5) eine kraftschlüssige Verbindung hergestellt wird, deren Lösung nach der Herstellung der Schweißverbindung eine Zugkraft auf die Schweißverbindung bewirkt, und eine gegebenenfalls zerstörungsfreie Schweißverbindung als Bestätigung der Qualität der Schweißverbindung verwendet wird.

12. Verfahren nach Anspruch 10 oder 11, **dadurch gekennzeichnet, dass** die Oberflächenkontur der zweiten Fügefläche (2.2) so gefertigt wird, dass die Abweichung zur Oberflächenkontur der ersten Fügefläche (1.1) stetig abnehmend ist und die Andruckkraft (F) über eine innere Andruckfläche (2.4) zwischen dem festen Ende (2.2.1) und der Längsachse (S), diese einschließend, eingetragen wird.

13. Verfahren nach Anspruch 10 oder 11, **dadurch gekennzeichnet, dass** die Oberflächenkontur der zweiten Fügefläche (2.2) so gefertigt wird, dass die Abweichung zur Oberflächenkontur der ersten Fügefläche (1.1) stetig zunehmend ist und die Andruckkraft (F) über eine äußere Andruckfläche (2.3) bezogen auf die Längsachse (S), außerhalb der zweiten Fügefläche (2.2) eingetragen wird.

## Claims

1. Welding assembly comprising a support part (1), made of a laser radiation-absorbent material and having at least one first joining surface (1.1), and an attachment part (2), having a longitudinal axis (S) and at least one collar piece (2.1) consisting of a laser radiation-transparent material having a second joining surface (2.2) with a fixed end (2.2.1) and a free end (2.2.2) and being arranged on a peripheral surface (U) of the attachment part (2) parallel to the longitudinal axis (S), wherein the at least one first joining surface (1.1) and the at least one second joining surface (2.2) form a joining region (3), by which the attachment part (2) is welded to the support part (1), thereby forming a welded joint, and the attachment part (2) includes at least one pressing surface, by means of which a pressing force (F) acting on the joining region (3) is introduced during the production of the welding assembly, wherein
the at least one collar piece (2.1) is flexible and a receiving mandrel (5) can be placed on or inserted into the attachment part (2) in the direction of the longitudinal axis (S) in order to receive the attachment part (2), move it toward the support part (1), position it on the support part (1) and press it onto said support part (1) by the at least one pressing surface, **characterized in that**,
prior to joining, the second joining surface (2.2) exhibits a surface contour with respect to an imaginary reference point (P) located on the longitudinal axis (S) and within the first joining surface (1.1), which surface contour, with respect to the same reference point (P), has a deviation from the surface contour of the first joining surface (1.1) that increases or decreases constantly from the fixed end (2.2.1) to the free end (2.2.2).

2. Welding assembly according to claim 1, **characterized in that** the at least one pressing surface is configured in such a way that, with a contact surface (2.5) on the attached or inserted receiving mandrel (5), it forms a force-fitting connection acting in the direction of the longitudinal axis (S).

3. Welding assembly according to claim 1 or 2, **characterized in that** the least one collar piece (2.1) deviating from a plane (E) through the imaginary reference point (P) and with the free end (2.2.2) facing the support part (1) is preformed, wherein the surface contour of the first joining surface (1.1) is flat or, at each point, with respect to the imaginary reference point (P), exhibits a smaller deviation (A₁) with the same orientation from the plane (E) imagined through the reference point (P) than a deviation (A₂) from the plane (E) exhibited by the second joining surface (2.2) at the same point, and the at least one pressing surface is an inner pressing surface (2.4), which is arranged between the longitudinal axis (S) and the second joining surface (2.2).

4. Welding assembly according to claim 1 or 2, **characterized in that** the at least one collar piece (2.1) deviating from a plane (E) through the imaginary reference point (P) and with the free end (2.2.2) facing the support part (1) is preformed, wherein, at each point, with respect to the imaginary reference point (P), the surface contour of the first joining surface (1.1) exhibits a deviation (A₁) from the plane (E) imagined through the reference point (P) with an opposite orientation to a deviation (A₂) of the second joining surface (2.2) from the plane (E) at the same point, and the at least one pressing surface is an inner pressing surface (2.4), which is arranged between the longitudinal axis (S) and the second joining surface (2.2).

5. Welding assembly according to claim 3 or 4, **characterized in that** the inner pressing surface (2.4) is a conical surface with respect to the longitudinal axis (S).

6. Welding assembly according to claim 1, **characterized in that** the at least one collar piece (2.1) deviating from a plane (E) through the imaginary reference point (P) and with the free end (2.2.2) facing away from the support part (1) is preformed, wherein the surface contour of the first joining surface (1.1) is flat or, at each point, with respect to the imaginary reference point (P), exhibtis a deviation (A₁) from the plane (E) imagined through the reference point (P) with an opposite orientation to a deviation (A₂) of the second joining surface (2.2) from the plane (E) at the same point, and the at least one pressing surface is an outer pressing surface (2.3) which, with respect to the longitudinal axis (S), is arranged outside the second joining surface (2.2).

7. Welding assembly according to claim 1, **characterized in that** the at least one collar piece (2.1) deviating from a plane (E) through the imaginary reference point (P) and with the free end (2.2.2) facing away from the support part (1) is preformed, wherein, at each point, with respect to the imaginary reference point (P), the surface contour of the first joining surface (1.1) exhibits a smaller deviation (A₁) with the same orientation from the plane (E) imagined through the reference point (P) than a deviation (A₂) from the plane (E) exhibited by the second joining surface (2.2) at the same point, and the at least one pressing surface is an inner pressing surface (2.4) which, with respect to the longitudinal axis (S), is arranged within the second joining surface (2.2).

8. Welding assembly according to one of the preceding claims, **characterized in that** there is exactly one collar piece (2.1), and the second joining surface (2.2) represents a lateral surface of a truncated cone or a spherical segment and the longitudinal axis (S) represents an axis of symmetry.

9. Welding assembly according to one of the preceding claims, **characterized in that** the support part (1) comprises a recess (1.2) or an aperture (1.3), and the attachment part (2) is at least partially inserted into the support part (1).

10. Method for producing a welding assembly, comprising a support part (1), consisting of a laser radiation-absorbent material and having at least one first joining surface (1.1), and an attachment part (2), having a longitudinal axis (S) and at least one collar piece (2.1), consisting of a flexible laser radiation-transparent material and having a second joining surface (2.2) with a surface contour which, from a fixed end (2.2.1) to a free end (2.2.2), deviates constantly from the surface contour of the first joining surface (1.1), wherein the at least one collar piece (2.1) is arranged on a peripheral surface (U) of the attachment part (2) parallel to the longitudinal axis (S), and the at least one first joining surface (1.1) and the at least one second joining surface (2.2) form a joining region (3), by which the attachment part (2) is welded to the support part (1), forming a welded joint, while a pressing force (F) acts on the joining region (3), wherein
the attachment part (2) is received by a receiving mandrel (5) in the direction of the longitudinal axis (S) of said attachment part (2), is moved toward the support part (1) by means of the receiving mandrel (5), is positioned with respect to said support part (1) and pressed onto it,
wherein the attachment part (2) is positioned with respect to the support part (1) by means of the receiving mandrel (5) in such a way that the at least one first and the at least one second joining surface (1.1, 2.2) are opposite from one another and the attachment part (2) is moved toward the support part (1) until it is in initial contact with the support part (1),
the pressing force (F) is introduced into the attachment part (2) in the direction of the longitudinal axis (S) by the receiving mandrel (5), wherein the attachment part (2) is attached to the support part (1) and the second joining surface (2.2) continuously snugs up to the first joining surface (1.1) from the location of initial contact until the first and the second joining surface (1.1, 2.2) have complete surface contact, wherein the at least one collar piece (2.1) is elastically deformed in a targeted manner to allow stresses to be introduced into the at least one collar piece (2.1), and the welding assembly is subjected to laser radiation by the second joining surface (2.2), as a result of which the attachment part (2) and the support part (1) are welded together in the joining region (3) and the stresses are released.

11. Method according to claim 10, **characterized in that** a force-fitting connection is produced when the receiving mandrel (5) receives the attachment part (2), the release of which after production of the welded joint results in a pulling force on the welded joint, and, if required, a non-destructive welded joint is used to confirm the quality of the welded joint.

12. Method according to claim 10 or 11, **characterized in that** the surface contour of the second joining surface (2.2) is produced in such a way that the deviation from the surface contour of the first joining surface (1.1) decreases constantly, and the pressing force (F) is introduced by an inner pressing surface (2.4) between the fixed end (2.2.1) and the longitudinal axis (S), including said inner pressing surface (2.4).

13. Method according to claim 10 or 11, **characterized in that** the surface contour of the second joining surface (2.2) is produced in such a way that the deviation from the surface contour of the first joining surface (1.1) increases constantly, and the pressing force (F) is introduced by an outer pressing surface (2.3) with respect to the longitudinal axis (S), outside the second joining surface (2.2).

## Revendications

1. Ensemble soudé comprenant une partie de support (1) d'un matériau absorbant au rayonnement laser ayant au moins une première surface de jonction (1.1), et une partie de coiffe (2) ayant un axe longitudinal (S) et au moins une pièce de collerette (2.1) d'un matériau transparent au rayonnement laser qui a une deuxième surface de jonction (2.2) avec une extrémité fixe (2.2.1) et une extrémité libre (2.2.2) et qui est disposée sur une surface circonférentielle (U) de la pièce de coiffe (2) parallèle à l'axe longitudinal (S), l'au moins une première surface de jonction (1.1) et l'au moins une deuxième surface de jonction (2.2) formant une zone de jonction (3), par laquelle la partie de coiffe (2) est soudée à la partie de support (1) formant un joint soudé, et la pièce de coiffe (2) comprenant au moins une surface de pression, au moyen de laquelle une force de pression (F) agissant sur la zone de jonction (3) est introduite lors de la fabrication de l'ensemble soudé, dans lequel
l'au moins une pièce de collerette (2.1) est élastique et un mandrin de réception (5) peut être placé sur ou introduit dans la partie de coiffe (2) en direction de l'axe longitudinal (S) pour recevoir la partie de coiffe (2), la déplacer vers la partie de support (1), la positionner sur la partie de support (1) et la presser sur la partie de support (1) par l'au moins une surface de pression, **caractérisé en ce que**,
avant la jonction, la deuxième surface de jonction (2.2) présente un contour de surface par rapport à un point de référence (P) imaginaire situé sur l'axe longitudinal (S) et à l'intérieur de la première surface de jonction (1.1), ledit contour de surface de la deuxième surface de jonction (2.2) présentant une déviation du contour de surface de la première surface de jonction (1.1) par rapport au même point de référence (P) qui diminue ou qui augmente constamment de l'extrémité fixe (2.2.1) à l'extrémité libre (2.2.2).

2. Ensemble soudé selon la revendication 1, **caractérisé en ce que** l'au moins une surface de pression est réalisée de telle manière qu'elle forme une liaison par friction agissant en direction de l'axe longitudinal (S) avec une surface de contact (2.5) présente sur le mandrin de réception (5) coiffé ou introduit.

3. Ensemble soudé selon la revendication 1 ou 2, **caractérisé en ce que** l'au moins une pièce de collerette (2.1), déviant d'un plan (E) à travers le point de référence (P) imaginaire et avec l'extrémité libre (2.2.2) faisant face à la partie de support (1), est préformée, dans lequel le contour de surface de la première surface de jonction (1.1) est plat ou, en chaque point, par rapport au point de référence (P) imaginaire, présente une déviation (A₁) plus petite avec le même sens de direction du plan (E) imaginé à travers le point de référence (P) qu'une déviation (A₂) du plan (E) présentée par la deuxième surface de jonction (2.2) au même point, et l'au moins une surface de pression est une surface de pression intérieure (2.4) disposée entre l'axe longitudinal (S) et la deuxième surface de jonction (2.2).

4. Ensemble soudé selon la revendication 1 ou 2, **caractérisé en ce que** l'au moins une pièce de collerette (2.1), déviant d'un plan (E) à travers le point de référence (P) imaginaire et avec l'extrémité libre (2.2.2) faisant face à la partie de support (1), est préformée, dans lequel, en chaque point, par rapport au point de référence (P) imaginaire, le contour de surface de la première surface de jonction (1.1) présente une déviation (A₁) du plan (E) imaginé à travers le point de référence (P) avec un sens de direction opposé à une déviation (A₂) de la deuxième surface de jonction (2.2) du plan (E) au même point, et l'au moins une surface de pression est une surface de pression intérieure (2.4) disposée entre l'axe longitudinal (S) et la deuxième surface de jonction (2.2).

5. Ensemble soudé selon la revendication 3 ou 4, **caractérisé en ce que** la surface de pression intérieure (2.4) est une surface conique par rapport à l'axe longitudinal (S).

6. Ensemble soudé selon la revendication 1, **caractérisé en ce que** l'au moins une pièce de collerette (2.1), déviant d'un plan (E) à travers le point de référence (P) imaginaire et avec l'extrémité libre (2.2.2) faisant face à l'opposé de la partie de support (1), est préformée, dans lequel le contour de surface de la première surface de jonction (1.1) est plat ou, en chaque point, par rapport au point de référence (P) imaginaire, présente une déviation (A₁) du plan (E) imaginé à travers le point de référence (P) avec un sens de direction opposé à une déviation (A₂) de la deuxième surface de jonction (2.2) du plan (E) au même point, et l'au moins une surface de pression est une surface de pression extérieure (2.3) disposée à l'extérieur de la deuxième surface de jonction (2.2) par rapport à l'axe longitudinal (S).

7. Ensemble soudé selon la revendication 1, **caractérisé en ce que** l'au moins une pièce de collerette (2.1), déviant d'un plan (E) à travers le point de référence (P) imaginaire et avec l'extrémité libre (2.2.2) faisant face à l'opposé de la partie de support (1), est préformée, dans lequel, en chaque point, par rapport au point de référence (P) imaginaire, le contour de surface de la première surface de jonction (1.1) présente une déviation (A₁) plus petite avec le même sens de direction du plan (E) imaginé à travers le point de référence (P) qu'une déviation (A₂) du plan (E) présentée par la deuxième surface de jonction (2.2) au même point, et l'au moins une surface de pression est une surface de pression intérieure (2.4) disposée à l'intérieur de la deuxième surface de jonction (2.2) par rapport à l'axe longitudinal (S).

8. Ensemble soudé selon une des revendications précédentes, **caractérisé en ce qu'**il y a exactement une pièce de collerette (2.1) et la deuxième surface de jonction (2.2) représente une surface latérale d'un cône tronqué ou d'un segment sphérique et l'axe longitudinal (S) représente un axe de symétrie.

9. Ensemble soudé selon une des revendications précédentes, **caractérisé en ce que** la partie de support (1) comprend un évidement (1.2) ou une ouverture (1.3) et la partie de coiffe (2) est introduite au moins partiellement dans la partie de support (1).

10. Procédé de fabrication d'un ensemble soudé, comprenant une partie de support (1), consistant en un matériau absorbant au rayonnement laser et ayant au moins une première surface de jonction (1.1), et une partie de coiffe (2), ayant un axe longitudinal (S) et au moins une pièce de collerette (2.1), consistant en un matériau élastique et transparent au rayonnement laser et ayant une deuxième surface de jonction (2.2) avec un contour de surface qui, d'une extrémité fixe (2.2.1) à une l'extrémité libre (2.2.2), présente une déviation constante du contour de surface de la première surface de jonction (1.1), l'au moins une pièce de collerette étant disposée sur une surface circonférentielle (U) de la pièce de coiffe (2) parallèle à l'axe longitudinal (S), et l'au moins une première surface de jonction (1.1) et l'au moins une deuxième surface de jonction (2.2) formant une zone de jonction (3), par laquelle la partie de coiffe (2) est soudée à la partie de support (1) formant un joint soudé, pendant qu'une force de pression (F) agisse sur la zone de jonction (3),
dans lequel la partie de coiffe (2) est reçue par un mandrin de réception (5) en direction de l'axe longitudinal (S) de ladite partie de coiffe (2), déplacée vers la partie de support (1) au moyen du mandrin de réception (5), positionnée par rapport à ladite partie de support (1) et pressée sur celle-ci,
la partie de coiffe (2) est positionnée par rapport à la partie de support (1) au moyen du mandrin de réception (5) de sorte que l'au moins une première et l'au moins une deuxième surface de jonction (1.1, 2.2) soient opposées l'une de l'autre et la partie de coiffe (2) est déplacée vers la partie de support (1) jusqu'à ce qu'elle soit mise en contact initial avec la partie de support (1),
la force de pression (F) est introduite dans la partie de coiffe (2) en direction de l'axe longitudinal (S) par le mandrin de réception (5), la partie de coiffe (2) étant attachée à la partie de support (1) et la deuxième surface de jonction (2.2) épouse continuellement la première surface de jonction (1.1) à partir du lieu de contact initial jusqu'à ce que la première et la deuxième surface de jonction (1.1, 2.2) sont complètement en contact de surface, l'au moins une pièce de collerette (2.1) étant déformée élastiquement d'une manière ciblée, pour permettre l'introduction de tensions dans l'au moins une pièce de collerette (2.1), et l'ensemble soudé faisant face au rayonnement laser par la deuxième surface de jonction (2.2), provoquant un soudage de la partie de coiffe (2) et la partie de support (1) l'une à l'autre dans la zone de jonction (3) et une libération des tensions.

11. Procédé selon la revendication 10, **caractérisé en ce qu'**une liaison par friction est produite quand le mandrin de réception (5) reçoit la partie de coiffe (2), la libération de la liaison, après la fabrication du joint soudé, provoquant une force de traction sur le joint soudé et, si requis, un joint soudé non-destructif est utilisé comme confirmation de la qualité du joint soudé.

12. Procédé selon la revendication 10 ou 11, **caractérisé en ce que** le contour de surface de la deuxième surface de jonction (2.2) est fabriqué de sorte que la déviation du contour de surface de la première surface de jonction (1.1) diminue constamment, et la force de pression (F) est introduite par une surface de pression intérieure (2.4) entre l'extrémité fixe (2.2.1) et l'axe longitudinal (S), incluant ladite surface de pression intérieure (2.4).

13. Procédé selon la revendication 10 ou 11, **caractérisé en ce que** le contour de surface de la deuxième surface de jonction (2.2) est fabriqué de sorte que la déviation du contour de surface de la première surface de jonction (1.1) augmente constamment, et la force de pression (F) est introduite par une surface de pression extérieure (2.3) par rapport à l'axe longitudinal (S), à l'extérieur de la deuxième surface de jonction (2.2).
